# EUROPEAN PATENT APPLICATION

(11) **EP 2 907 673 A1**
(43) Date of publication of application: **19.08.2015**
(21) Application number: 15154532.4
(22) Date of filing: 10.02.2015
(51) Int. Cl.: B60B 27/00, B60B 27/02, B60B 27/04, F16D 1/06

(54) **Bicycle hub with protective structure**

(30) Priority: 12.02.2014 TW 103202458 U
(71) Applicant: Chen, Fu Sheng, Taichung City 40748 (TW)
(72) Inventor: Chen, Fu Sheng, Taichung City 40748 (TW)
(74) Representative: Chaillot, Geneviève

(57) **Abstract**

A bicycle hub with protective structure includes a hub cassette (1) and at least one protective member (2). The hub cassette (1) has a driving portion (12) and a shell portion (11) connected to the driving portion (12). The shell portion (11) has a plurality of ribs (14) integrally formed on an outer periphery of the shell portion (11) and extending axially. The protective member (2) is made of harder material than that of the ribs (14). The protective member (2) has a U-shaped cross section and defines a top wall (23) and two side walls (22). The top wall (23) and the two side walls (22) define an engaging groove (21). Specifically, an inner angle of the engaging groove (21) between the top wall (23) and each of the side walls (22) is an acute angle originally. Each of the two side walls (22) of the protective member (2) is flexible relative to the top wall (23) of the protective member (2) so as to clamp two lateral walls of the associated rib (14).

## Description

### BACKGROUND OF THE INVENTION

### 1. Field of the Invention

The present invention relates to a bicycle hub, and more particularly to a protective structure for a bicycle hub.

### 2. Description of Related Art

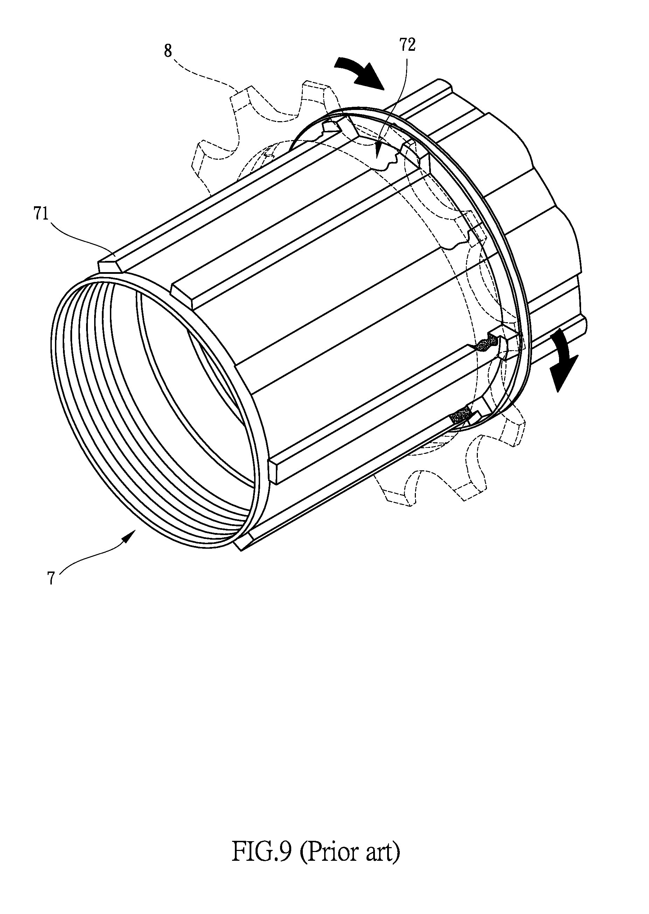

Generally, a hub cassette 7 has a plurality of ribs 71 on an outer periphery of the hub cassette 7 for engagement with a sprocket 8, as shown in FIG. 9. The sprocket 8 is mounted around the hub cassette 7 and retained by the ribs 71. However, the ribs 71 may be worn easily for continuous riding since the sprocket 8 are generally harder than the ribs 71. At the same time, each rib 71 would be worn to produce a notch 72 which causes the sprocket 8 cannot drive a bicycle hub effectively.

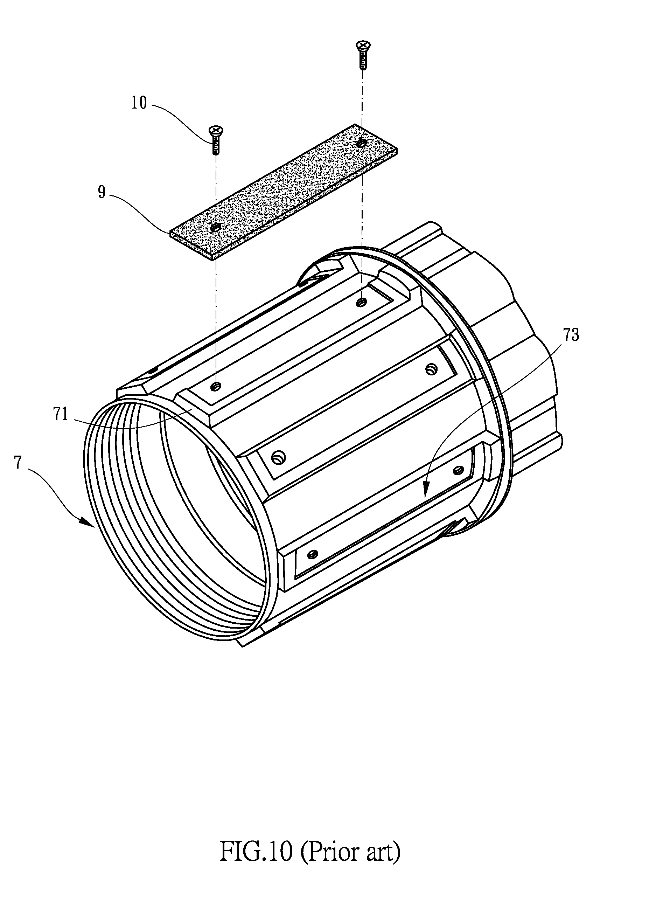

In order to solve above problem, a conventional bicycle hub further comprises a metal sheet 9 attached to the rib 71, as shown in FIG. 10. Wherein, the rib 71 has a recess 73 in a top thereof for accommodating the metal sheet 9. The metal sheet 9 is harder than the sprocket 8. The metal sheet 9 is fixed to the rib 71 by a plurality of screws 10 so as to reinforce the structure of the hub cassette 7. However, the configuration of the recess 73 will increase manufacturing cost and the screws 10 may be loosened during riding.

Another type of bicycle hub is illustrated in U.S. Pub. No. 2013/0076112. In this bicycle hub, a driving socket has a plurality of ribs extending axially on the outer surface thereof and at least one protection unit located between two of the ribs and has an engaging portion. A cover is engaged with the engaging portion and has a cover face and two sidewalls to form an engaging groove. Specifically, the engaging portion has two transmission surfaces respectively located on two sides thereof and each transmission surface is gradually tapered toward a center of the driving socket. Each of the two sidewalls of the cover has an inclined surface corresponding to the respective transmission surface of the engaging portion for engagement between the engaging groove of the cover and the engaging groove. Furthermore, two sides of the engaging portion each has a positioning slot in the outer surface of the driving socket, wherein each sidewall of the cover has an extension engaged with the positioning slot to increase the contact area between the cover and the engaging portion. However, the configurations of the transmission surface and the positioning slot of the engaging portion will reduce the strength of the driving socket. Besides, the manufacturing processes of the engaging portion and the cover will increase manufacturing cost.

The present invention has arisen to mitigate and/or obviate the disadvantages of the conventional bicycle hub.

### SUMMARY OF THE INVENTION

The main objective of the present invention is to provide an improved bicycle hub.

To achieve the objective, a bicycle hub comprises a hub cassette and at least one protective member. The hub cassette has a driving portion and a shell portion connected to the driving portion. The shell portion has a plurality of ribs integrally formed on an outer periphery of the shell portion and extending axially from one end of the shell portion to the other end of the shell portion. The protective member is made of harder material than that of the ribs. The protective member is attached to at least one of the ribs of the shell portion. The protective member has a U-shaped cross section and defines a top wall and two side walls extending from a bottom of the top wall. The top wall and the two side walls define an engaging groove. Specifically, an inner angle of the engaging groove between the top wall and each of the side walls is an acute angle originally. Wherein each of the two side walls of the protective member is flexible relative to the top wall of the protective member such that the two side walls of the protective member clamp two lateral walls of the associated rib.

Preferably, the bicycle hub further comprises another two protective members attached to the ribs of the shell portion, and the three protective members are disposed in triangular arrangement.

Another object in accordance with the present invention is the provision of a method for manufacturing the bicycle hub above.

The method comprises the steps of (a). cutting a solid rod into a plurality of rod pieces; (b). molding each of the rod pieces into a semi-product by a mold, wherein the semi-product has a driving portion, a shell portion, and a plurality of ribs integrally formed on an outer periphery of the shell portion; (c). removing excess material of the semi-product to form a hollow structure; (d). anodizing a surface of the semi-product to form a final product; and (e). attaching at least one protective member to a related one of the ribs of the shell portion, the protective member made of harder material than that of the ribs and having a U-shaped cross section and defining a top wall and two side walls extending from a bottom of the top wall, the top wall and the two side walls defining an engaging groove, wherein an inner angle of the engaging groove between the top wall and each of the side walls being an acute angle originally, and the two side walls of the protective member are flexible to clamp two lateral walls of the associated rib.

Preferably, in step (e), an installation of the protective member is manual, semi-automatic or fully automatic. In addition, another two protective members are attached to the ribs of the shell portion such that the three protective members are disposed in triangular arrangement. Moreover, in step (c), the hollow structure of the semi-product defines an assembling hole therethrough from the shell portion to the driving portion axially.

Further benefits and advantages of the present invention will become apparent after a careful reading of the detailed description with appropriate reference to the accompanying drawings.

### BRIEF DESCRIPTION OF THE DRAWINGS

FIG. 1 is a perspective view of a bicycle hub with a protective member in accordance with a preferred embodiment of the present invention;
FIG. 2 is an exploded perspective view of the bicycle hub shown in FIG. 1;
FIG. 3 is a flow chart of a manufacturing process of the bicycle hub of the present invention;
FIG. 4 illustrates a material preparing step of the bicycle hub of the present invention;
FIG. 5 illustrates a molding step of the bicycle hub of the present invention;
FIG. 6 is a perspective view of a semi-product from the molding step in FIG. 5;
FIG. 7 illustrates at least one protective member attached to the shell portion of the present invention;
FIG. 8 is a side view for showing the protective member attached to the shell portion of the present invention;
FIG. 9 is prior art; and
FIG. 10 is another prior art.

### DETAILED DESCRIPTION OF THE INVENTION

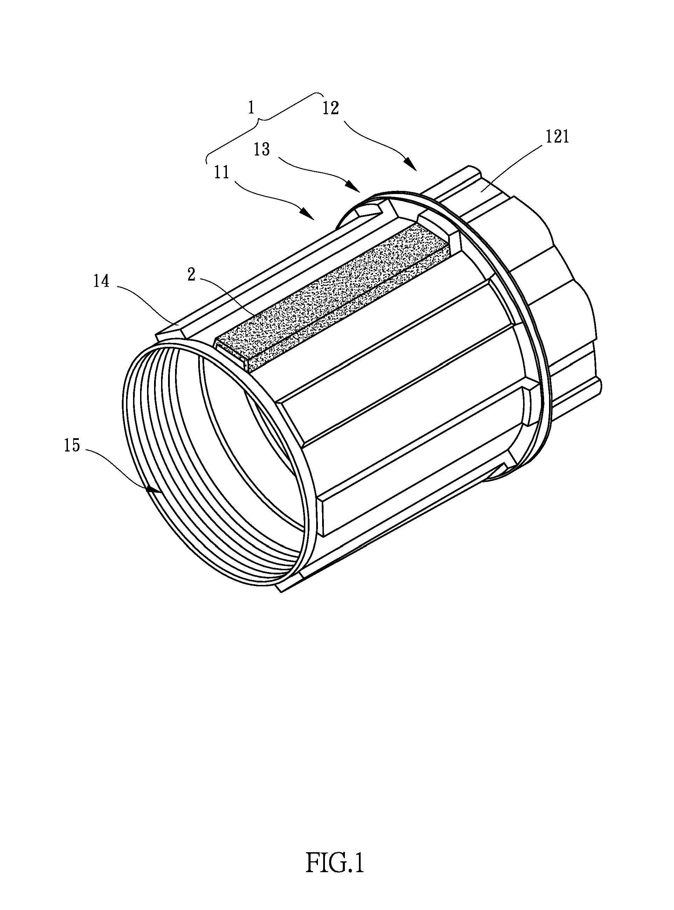

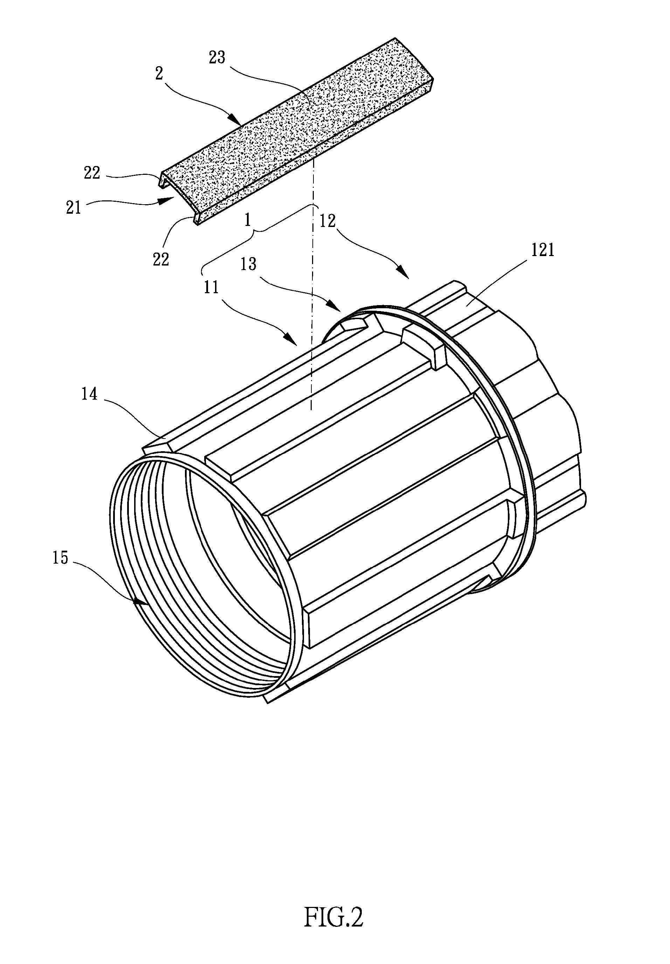

Referring to FIGS. 1-2, a bicycle hub in accordance with a preferred embodiment of the present invention comprises a hub cassette 1 and at least one protective member 2.

The hub cassette 1 has a driving portion 12, a shell portion 11 connected to the driving portion 12 and a flange 13 defined between the shell portion 11 and the driving portion 12. The driving portion 12 of the hub cassette has a plurality of recesses 121 around an outer periphery thereof. The shell portion 11 has a plurality of ribs 14 integrally formed on an outer periphery of the shell portion 11 and extending axially from one end of the shell portion 11 to the other end of the shell portion 11. The protective member 2 is made of harder material than that of sprockets and the hub cassette especially the ribs 14. The protective member 2 is attached to at least one of the ribs 14 of the shell portion 11. The protective member 2 has a U-shaped cross section and defines a top wall 23 and two side walls 22 extending from a bottom of the top wall 23. The top wall 23 and the two side walls 22 form an engaging groove 21.

Specifically, an inner angle of the engaging groove 21 between the top wall 23 and each of the side walls 22 is an acute angle originally, wherein each of the two side walls 22 of the protective member 2 is flexible relative to the top wall 23 of the protective member 2 such that the two side walls 22 of the protective member 2 clamp two lateral walls of the associated rib 14. In this manner, the protective member 2 is fitted on the associated rib 14, and the inner angle between the top wall 23 and each side wall 22 is consistent with the angle of the associated rib 14 finally. In the embodiment of the present invention, the angle between the top wall 23 and each side wall 22 is changed to a right angle.

Moreover, the number of the protective member 2 is not limited in the present invention. For instance, the bicycle hub could further comprises another two protective members 2 such that the three protective members 2 are attached to the ribs 14 of the shell portion 11, and the three protective members 2 are disposed in triangular arrangement. Furthermore, the hub cassette 1 is hollow cylindrical in shape which defines an assembling hole 15 therethrough.

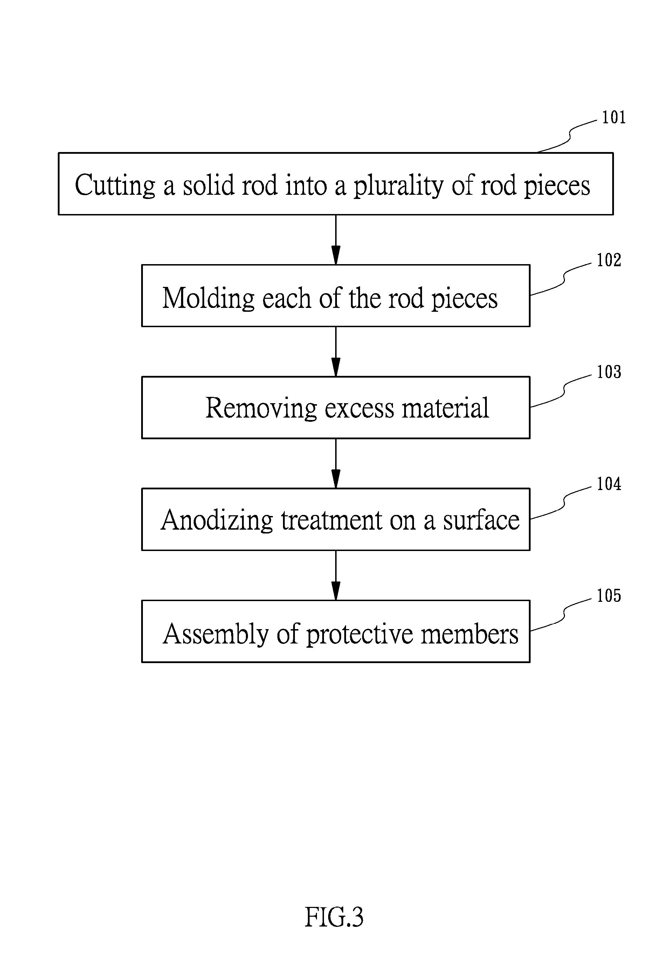

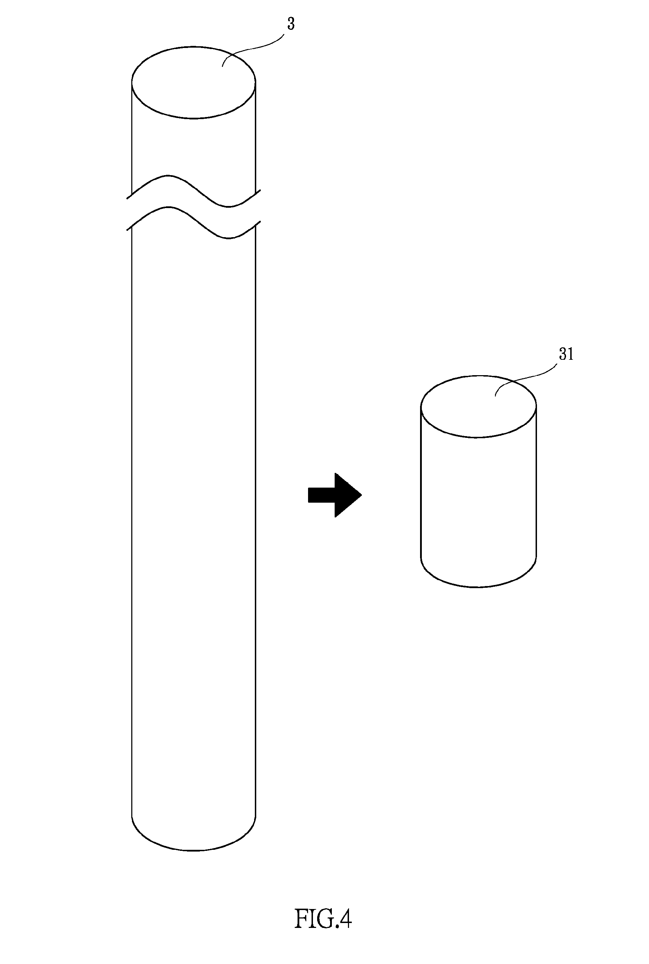

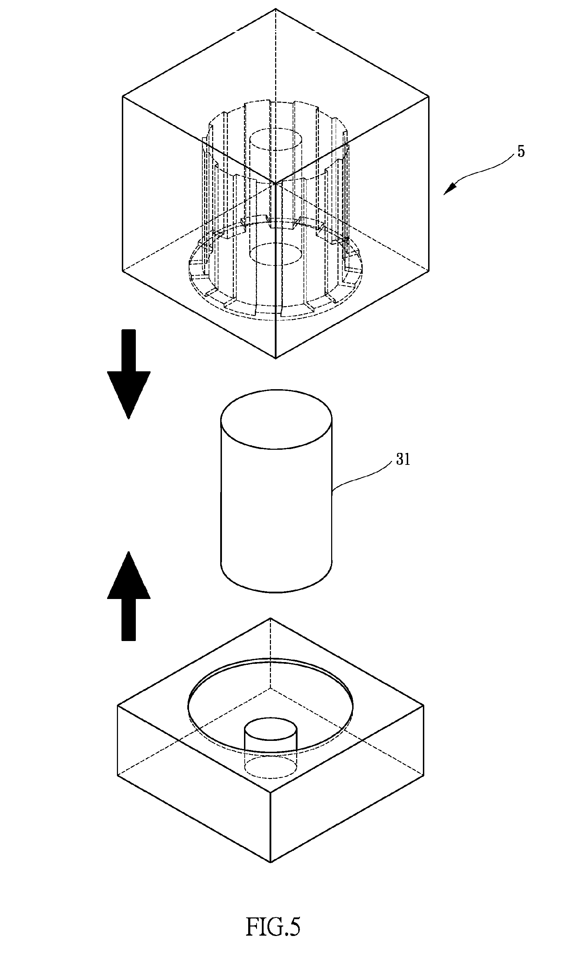

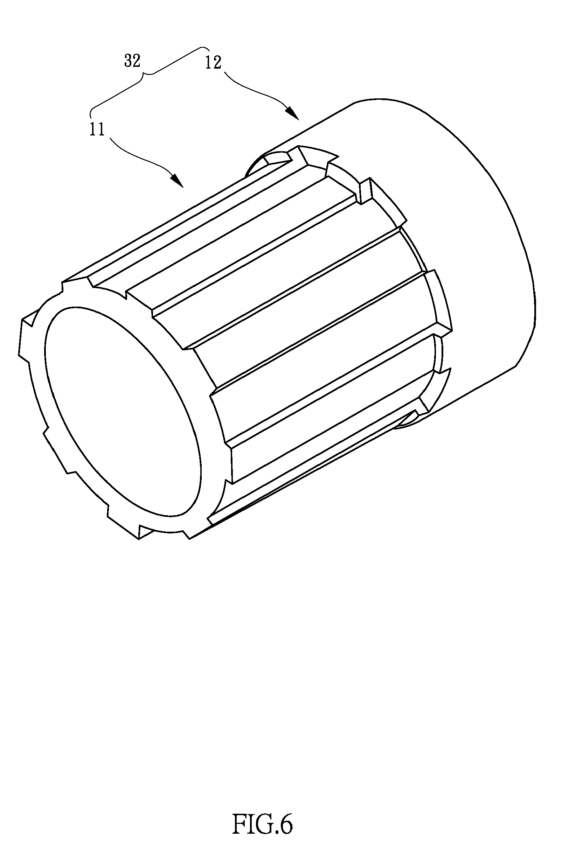

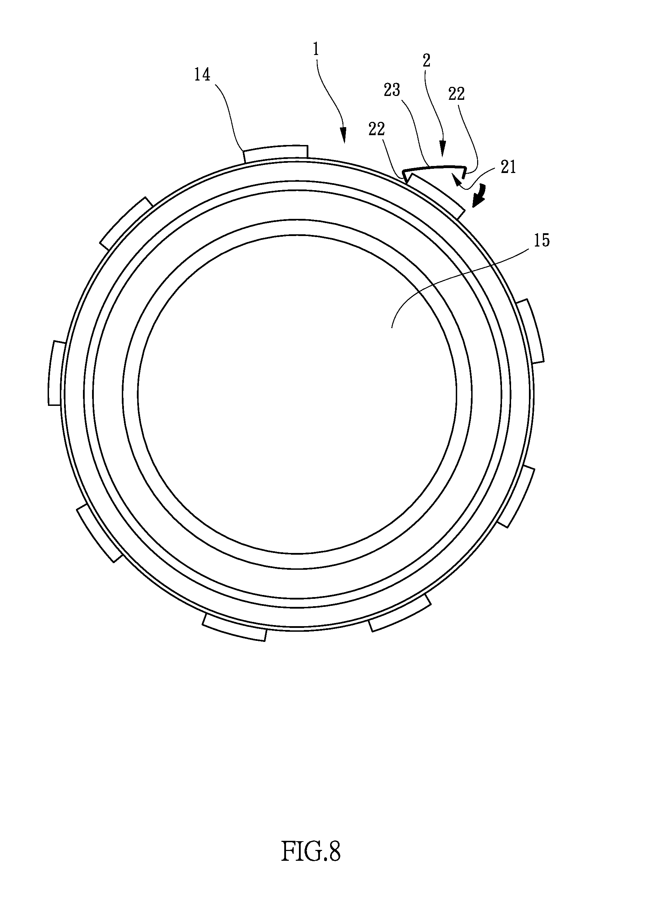

Referring to FIGS. 3-8, a method of manufacturing above bicycle hub is described below. The method comprises the steps of:
In step 101, a solid rod 3 is cut into a plurality of rod pieces 31, firstly.
In step 102, each of the rod pieces 31 is molded into a semi-product 32 by a mold 5, wherein the semi-product 32 is formed with a driving portion 12, a shell portion 11, and a plurality of ribs 14 integrally formed on an outer periphery of the shell portion 11.
In step 103, excess material of the semi-product 32 is removed to form a hollow structure which defines an assembling hole 15 therethrough from the shell portion 11 to the driving portion 12 axially.
In step 104, a surface of the semi-product 32 is anodized to form a final product.

Finally, in step 105, at least one protective member 2 is attached to a related one of the ribs 14 of the shell portion 11.

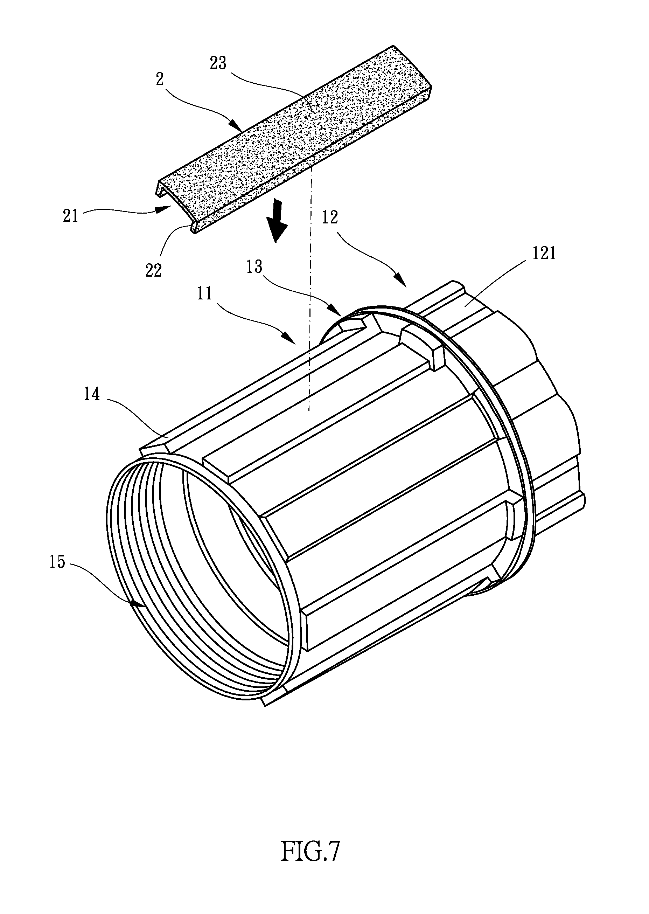

As mentioned previously, the two side walls 22 of the protective member 2 are flexible relative to the top wall 23. FIGS. 7-8 illustrate the operation of the protective member 2. Firstly, the protective member 2 is leaned against one lateral wall of the associated rib 14 with one of the two side walls 22, and then the other side wall 22 is bent to buckle the opposite lateral wall of the associated rib 14 such that the protective member 2 clamps the associated rib 14 to retain on the hub cassette 1. In this manner, the inner angle between the top wall 23 and each side wall 22 is consistent with the angle of the associated rib 14. Particularly, the protective member 2 could be attached to the associated rib 14 by further adhesive. In addition, The installation of the protective member 2 could be manual, semi-automatic or fully automatic.

## Claims

1. A bicycle hub, comprising a hub cassette (1) having a driving portion (12) and a shell portion (11) connected to the driving portion (12), the shell portion (11) having a plurality of ribs (14) integrally formed on an outer periphery of the shell portion (11) and extending axially from one end of the shell portion (11) to the other end of the shell portion (11); **characterized in that** the bicycle hub further comprises at least one protective member (2) made of harder material than that of the ribs, the protective member (2) attached to at least one of the ribs (14) of the shell portion (11), the protective member (2) having a U-shaped cross section and defining a top wall (23) and two side walls (22) extending from a bottom of the top wall (23), the top wall (23) and the two side walls (22) defining an engaging groove (21), an inner angle of the engaging groove (21) between the top wall (23) and each of the side walls (22) being an acute angle originally; wherein each of the two side walls (22) of the protective member (2) is flexible relative to the top wall (23) of the protective member (2) such that the two side walls (22) of the protective member (2) clamp the associated rib (14).

2. The bicycle hub as claimed in claim 1, further comprising another two protective members (2) attached to the ribs (14) of the shell portion (11), wherein the three protective members (2) are disposed in triangular arrangement.

3. The bicycle hub as claimed in claim 1, wherein the hub cassette (1) is hollow cylindrical in shape which defines an assembling hole (15) therethrough.

4. A method of manufacturing a bicycle hub, comprising the steps of:
(a). cutting a solid rod into a plurality of rod pieces;
(b). molding each of the rod pieces into a semi-product by a mold, wherein the semi-product has a driving portion (12), a shell portion (11), and a plurality of ribs integrally formed on an outer periphery of the shell portion (11);
(c). removing excess material of the semi-product to form a hollow structure;
(d). anodizing a surface of the semi-product to form a final product; **characterized in that**
the method further comprising the step of (e). attaching at least one protective member (2) to a related one of the ribs (14) of the shell portion (11), the protective member (2) made of harder material than that of the ribs (14) and having a U-shaped cross section and defining a top wall (23) and two side walls (22) extending from a bottom of the top wall (23), the top wall (23) and the two side walls (22) defining an engaging groove (21), wherein an inner angle of the engaging groove (21) between the top wall (23) and each of the side walls (22) being an acute angle originally, and the two side walls (22) of the protective member (2) are flexible to clamp the associated rib (14).

5. The method of manufacturing the bicycle hub as claimed in claim 4, wherein in step (e), another two protective members (2) are attached to the ribs (14) of the shell portion (11) such that the three protective members (2) are disposed in triangular arrangement.

6. The method of manufacturing the bicycle hub as claimed in claim 4, wherein in step (c), the hollow structure of the semi-product defines an assembling hole (15) therethrough from the shell portion (11) to the driving portion (12) axially.
